# EUROPEAN PATENT APPLICATION

(11) **EP 2 439 108 A1**
(43) Date of publication of application: **11.04.2012**
(21) Application number: 11382310.8
(22) Date of filing: 04.10.2011
(51) Int. Cl.: B60R 13/10

(54) **Multipurpose license plate**

(30) Priority: 05.10.2010 ES 201031000 U
(71) Applicant: INDUSTRIAS SAMAR'T, S.A., 17600 Figueres (Gerona) (ES)
(72) Inventor: Sanchez Casadevall, Enrique, 17600 FIGUERES (GERONA) (ES)
(74) Representative: Munoz Garcia, Antonio

(57) **Abstract**

The present invention relates to a multipurpose license plate, of the type provided with reflective material and distinctive elements of the different territorial areas, intended to be subjected to a deep drawing press for engraving the corresponding numbering, comprising: - a lower part (2) as a support base formed by a flat aluminum body with the pertinent measurements according to regulations, - and an upper part (4) also an aluminum plate but thinner, and provided with the reflective material and the distinctive elements; rapid fixing means, such as adhesive strips protected with protective paper having been provided for the attachment between the lower part (2) and the upper part (4).

## Description

### Object of the Invention

The invention, such as shown in the title of the present specification, relates to a multipurpose license plate, providing several advantages and novelty features, which will be described in detail below, involving an improved alternative with respect to the currently known systems for the same purpose.

More particularly, the object of the invention is centered on a license plate, particularly of the type the numbering of which is made by means of deep drawing, having the particularity of being formed such that it allows speeding up and reducing the cost of its production to provide it with the distinct identifying elements of different countries, states, regional areas, etc., advantageously allowing the avoidance of costs for storing the puncher, essentially as a result of having two independent and separated parts but provided with rapid fixing means, in which one of said parts is a sheet with the identifying elements of the corresponding territorial area and the other is a support common to all the plates, and once attached they form the plate to be deep drawn.

### Field of Application of the Invention

The present invention is encompassed within the technical sector of the industry dedicated to the manufacturing of license plates.

### Background of the Invention

As it is known, license plates are generally produced from a metal plate, normally aluminum metal plate, which is subjected to a deep drawing process for incorporating the embossed alphanumeric signs corresponding to the same. Said plate, which on its upper face can have reflective elements, almost always also incorporates a series of identifying elements or symbols of the country, state or regional area to which the vehicle to be licensed belongs, which are common for all the licenses of each area.

This means the puncher that deep draws the license plates must have a sufficient stock of blank plates, but with the distinctive elements of the different areas, which involves a significant economic cost.

Therefore, the objective of the present invention is to solve said problem by means of producing the plates from two parts, a common part acting as a support and an upper part for incorporating the identifying elements, thus dividing the stocking cost since with it the possibility of having an indefinite stock of the part making up the common support, and a reduced stock of the upper parts which are different for each area is provided to the puncher that deep draws the plates.

It must further be highlighted that the applicant is unaware of the existence of any other license plate invention of similar application having such features.

### Summary of the Invention

Thus, the multipurpose license plate which proposed by the present invention is configured as an outstanding novelty within its field of application, the objectives previously mentioned as being ideal are satisfactorily and specifically achieved in light of its implementation, the characterizing details being those that make it possible and which distinguish it from that already known in the market, conveniently included in the final claims accompanying the present specification thereof.

Specifically, what the invention proposes is a license plate, which in a characterizing manner, is formed from two parts, a lower part acting as a support and an upper part incorporating the variable distinctive elements.

Therefore the costs for stocking puncher when deep drawing plates of different countries, states, areas or districts are minimized.

Thus, the lower support part of the plate is common to all the plates. It is an aluminum plate that will have the pertinent measurements according to current regulations and a thickness of approximately 1 mm. The rear part of this lower part of the plate may or may not incorporate adhesive for its fixing to the vehicle, as appropriate.

The upper part is also an aluminum plate but with a significantly lower thickness, about 0.2-0.3 mm and somewhat smaller dimensions than those of the lower part for leaving a perimetric border between both parts. This upper part of the plate is provided with reflective material on its upper surface and incorporates the logos and/or distinctive elements of the different territorial areas printed thereon, being able to further incorporate, if desired, additional adhesive details.

During the deep drawing, the puncher or operator, the lower part of the plate must simply be attached with the upper part provided with the appropriate distinctive elements; rapid fixing means, such as adhesive strips which will preferably be incorporated on the rear surface of the upper part of the plate, conveniently protected with protective paper having been provided for facilitating said attachment.

Once both parts are attached, the plate is finished and it can proceed to its deep drawing with the corresponding numbers and letters.

It is therefore affirmed that the multipurpose license plate proposed by the present invention represents an innovative structure having constitutive and structural features unknown up until now, reasons which together with its practical usefulness provide it with sufficient basis for obtaining the privilege of exclusivity applied for.

### Description of the Drawings

To complement the description of the apparatus object of the invention that is being made and for the purpose of aiding to better understand the features which distinguish it, a set of drawings is attached as an integral part of the present specification in which the following has been depicted with an illustrative and non-limiting character:

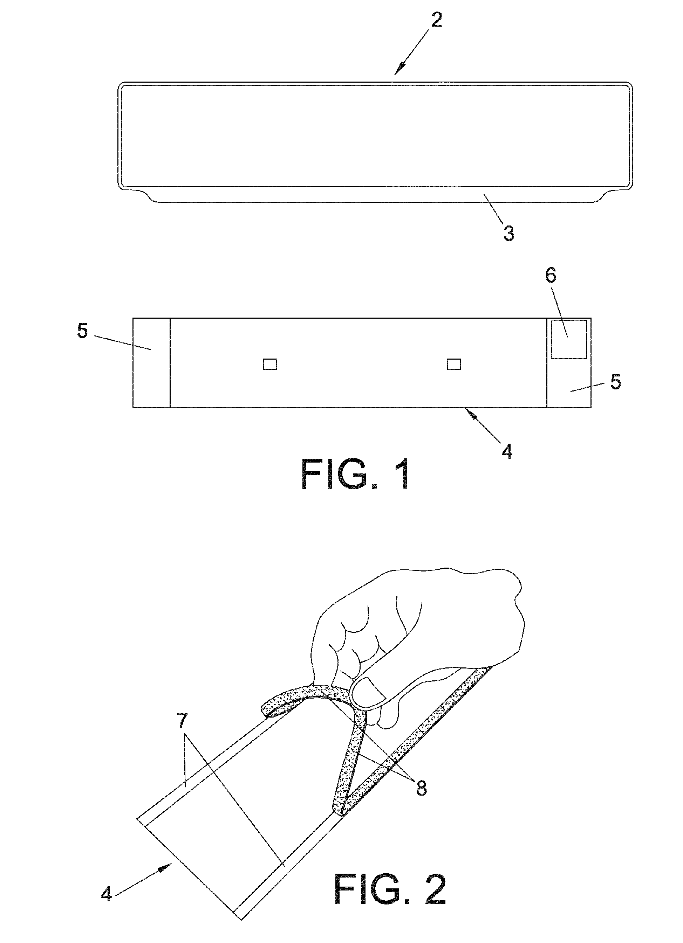

Figure 1 shows a plane view of the two parts forming the license plate object of the invention, the upper part and the lower part thereof being seen individually.
Figure 2 shows a view of the back of the upper part of the plate, on the surface of which the rapid attachment means for attachment with the lower part of the plate are incorporated.
Figure 3 shows a view of the already assembled plate, which plate has been depicted incorporated in the deep drawing press where the manufacturing process thereof ends.

### Preferred Embodiment of the Invention

In view of the mentioned figures, and according to the adopted numbering, an example of the proposed invention, which comprises the parts and elements indicated and described in detail below can be observed therein.

Thus, as seen in said figures, plate (1) in question, which as has been indicated in previous sections is of the type formed by an aluminum plate intended to be subjected to a deep drawing process by means of a deep drawing press for engraving the corresponding numbering on it, it is configured, in the characterizing manner, from the following elements :
- a lower part (2) formed by a flat aluminum body with the pertinent measurements according to the current regulations and a thickness of approximately 1 mm. Said lower part acting as a support base may or may not incorporate adhesive on its back or lower face, as well as, optionally, a lower thicknessing (3) for the incorporation of text or logos with information about the manufacturer, the dealership, business name, etc.
- and a upper part (4) which is also an aluminum plate, but with a significantly lower thickness, about 0.2-0.3 mm and somewhat smaller dimensions than those of the lower part or support for leaving a perimetric border between both parts. This upper part (4) of the plate is provided with reflective material on its upper surface and incorporates distinctive elements (5) of the different territorial areas printed thereon, and optionally additional adhesive details (6).

To facilitate the attachment between the lower part (2) and the upper part (4) which will form the plate (1), rapid fixing means such as adhesive strips (7) protected with protective paper (8) which are incorporated preferably on the surface of the back of the upper part (4) of the plate, have been provided.

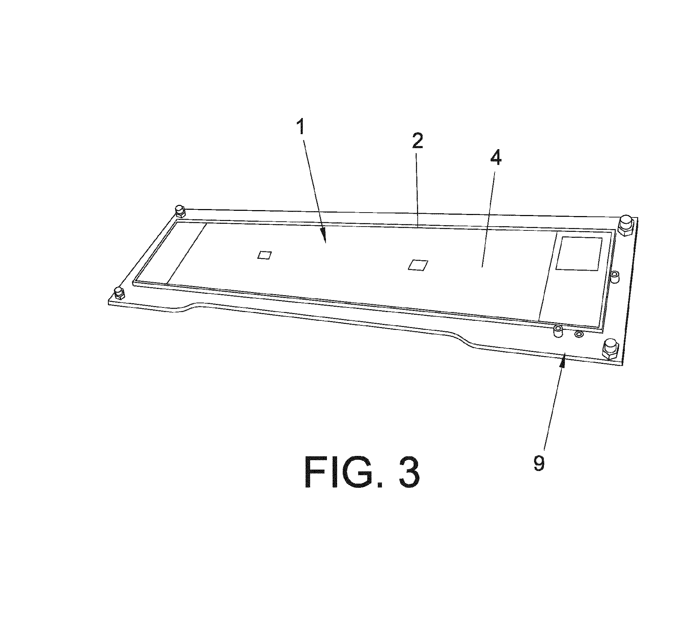

As is observed in Figure 3, once the lower part (2) and the upper part (4) are attached with said rapid attachment means, the plate (1) is finished and ready to be placed in the deep drawing press (9).

Having sufficiently described the nature of the present invention, as well as the way of putting it into practice, a further explanation is not considered necessary for any person skilled in the art to understand the scope and advantages derived from it, it must be stated that, it can be carried out into practice in other embodiments differing in detail from that the indicated by way of example within its essentiality, which embodiments will also achieve the protection sought provided that the fundamental principle thereof is not altered, changed, or modified.

## Claims

1. A multipurpose license plate, of the type formed by an aluminum plate (1) provided with reflective material on its upper surface as well as distinctive elements (5) of the different territorial areas, which may or may not incorporate adhesive on its back or lower face, as well as, optionally, a lower thicknessing (3) for the incorporation of text or logos with information about the manufacturer, the dealership, business name, etc., and being intended for being subjected to a deep drawing process by means of a deep drawing press for engraving the corresponding numbering therein, **characterized in that** it comprises:
- a lower part (2) acting as a support base and formed by a flat aluminum body with the pertinent measurements according to current regulations,
- and an upper part (4) which is also an aluminum plate but with a smaller thickness than the lower plate, being provided with reflective material on its upper surface and incorporating the distinctive elements (5) of the different territorial areas printed thereon;
rapid fixing means, such as adhesive strips (7) protected with protective paper (8) having been provided for facilitating the attachment between the lower part (2) and the upper part (4) forming the plate (1).

2. The multipurpose license plate according to claim 1, **characterized in that** the rapid fixing means are incorporated on the surface of the back of the upper part (4) of the plate.

3. The multipurpose license plate according to claim 1, **characterized in that** the lower part (2) of the plate has a thickness of approximately 1 mm; and **in that** the upper part (4) has a thickness of 0.2-0.3 mm.

4. The multipurpose license plate according to claim 1, **characterized in that** the upper part (4) has somewhat smaller dimensions than those of the lower part or support for leaving a perimetric border between both parts.
